# EUROPEAN PATENT APPLICATION

(11) **EP 3 085 328 A1**
(43) Date of publication of application: **26.10.2016**
(21) Application number: 16150015.2
(22) Date of filing: 04.01.2016
(51) Int. Cl.: A61C 7/14

(54) **AN ORTHODONTIC TREATMENT BRACKET**

(30) Priority: 23.04.2015 CN 201510197038
(71) Applicant: Zhao, Xilin, Chengdu City, Sichuan 610036 (CN); Chen, Yangxi, Chengdu City, Sichuan 610041 (CN)
(72) Inventor: Zhao, Xilin, Chengdu City, Sichuan 610036 (CN); Chen, Yangxi, Chengdu City, Sichuan 610041 (CN)
(74) Representative: Casalonga

(57) **Abstract**

The present invention relates to an orthodontic treatment bracket, which includes a bracket base and a groove with a Tip-edge shape and also has a detachable groove extender. The present invention can switch two different contact modes between the archwire and the bracket groove through flexibly controlling the length of groove with the extender, for purpose of satisfying the different requirements for friction in different clinical treatment stages. The present invention is also related to a double-groove bracket with a groove extender, including a bracket base and a mesial groove and a distal auxiliary groove which are parallel and located at the upper and lower sides of the bracket base. The distance between the base of the mesial groove and the bracket base is greater than the distance between the base of the distal auxiliary groove and the bracket base. The vertical distance between the lateral center line of the mesial groove and that of the distal auxiliary groove is 0.086-0.196 inches, effectively controling the movement of teeth in three directions, improving the effect of the orientation adjustment and shortening the duration of orientation adjustment.

## Description

### FIELD OF TECHNOLOGY

The present invention belongs to the field of medical device, specifically relating to an orthodontic treatment bracket.

### BACKGROUND TECHNOLOGY

Malocclusion is a misalignment or incorrect relation between the teeth of two dental arches, and the occlusion disorder and skeletal disharmony of the face is caused thereby. Therefore, two major tasks of orthodontic treatment are: first is position adjustment, namely adjusting the position of teeth so as to correct the malpositioned teeth; second is orientation adjustment, namely adjusting the three-dimensional orientation of teeth, so as to regain normal three-dimensional orientation for abnormally orientated teeth. The purporse of treatment is to achieve normal standard of occlusion, meanwhile improving profile.

Only when the position and orientation of each teeth of two dental arches are normal, the two dental arches can achieve good occlusion.

There are many methods of malocclusion correction, among which the fixed orthodontics is the major one. When using fixed orthodontics to correct malocclusion, the orthodontist applies orthodontic force to each tooth through the interaction between the archwire and the orthodontic bracket fixed on the teeth, and then moves each tooth to the required specific position and controls its three-dimensional orientation. During the orthodontic procedure, the position adjustment and orientation adjustment of teeth are usually realized through two different stages:
(1) Position adjustment: this stage is mainly to adjust the position of teeth, namely moving the malpositioned teeth to the right position. Seen from the perspective of biomechanics, the clearance between the bracket groove and the archwire should be as large as possible in this stage, so as to decrease the contact area between the bracket groove and archwire and lower the friction between the two, thereby the malpositioned teeth can be corrected to normal position in a relatively short time.
(2) Orientation adjustment: this stage is mainly to adjust three-dimensional orientation of teeth, namely correcting the abnormal dimensional orientation of teeth and returning to normal. Seen from the perspective of biomechanics, the clearance between the bracket groove and the archwire should be as small as possible in this stage, so as to realize the precise fitting between the groove and the archwire, thereby a enough orthodontic force can be applied to three directions to make orientation adjustment to the abnormally oriented teeth.

From the foregoing, in the two stages of position adjustment and orientation adjustment, the requirement of the clearance and friction between the orthodontic bracket and the archwire are different due to different correction objectives. The position adjustment aims to create large clearance and small friction, and the orientation adjustment is intended to reach small clearance and large friction.

During the orthodontics procedure, orthodontic force should be applied to each teeth, in order to move each tooth to the required specific position and control its three-dimensional orientation, thus the fine structure of the orthodontic bracket directly affects the corrective effect. Under the current technology, the corrective effect of clinically used orthodontic brackets is limited, the correction period is relatively long and the overall treatment effect is poor.

The structure design of orthodontic bracket is crucial for the success of position adjustment and orientation adjustment. Currently, orthodontic brackets available in domestic and foreign markets can be divided according its structure:
(1) Single-groove bracket and double-groove bracket according to the number of grooves;
(2) Single-wing bracket (narrow bracket) and double-wing bracket (wide bracket) according to the number of bracket wings;
(3) Ligature bracket and self-ligating bracket according to the connecting method of the archwire and orthodontic bracket.

For the single wing (narrow groove) bracket used under the current technology, the contact area between the correction archwire and the orthodontic bracket groove is small, namely the so-called "point contact". No doubt the "point contact" can reduce friction, making it easier to move the teeth during the position adjustment, but the "point contact" also means that the correction archwire cannot fully fit with the bracket during the orientation adjustment or effectively adjust the three-dimensional orientation of teeth, thus the treatment effect is limited. When using the current double-wing bracket (wide bracket) for correction, the contact area between the archwire and the bracket groove is large, namely multiple point contacts. This leads to a big friction between the archwire and the bracket, thus making the teeth harder to move and the treatment duration longer in the position adjustment procedure.

### SUMMARY OF THE INVENTION

In view of the deficiency of existing technoloy, the present invention is related to a great bracket which can meet the different requirements of position adjustment and orientation adjustment, so as to accurately control the three directions of teeth, improve tooth occlusion, coordinate facial proportion, and at the same time shorten the treatment process.

The detailed technical protocol of the present invention is as follows:
An orthodontic treatment bracket, comprising a bracket base 1) and a groove 2, which consists of a groove base 21 fixed on the bracket base 1, an upper sidewall 22 and a lower sidewall 23, wherein the said two sidewalls extend outward to form an upper wing 24 and a lower wing 25 respectively, and the said upper sidewall 22 of said groove consists of an upper lateral sidewall 221 and an upper sloped sidewall 222 which is formed by bend upward at one end thereof, with an obtuse angle between them, and the said lower sidewall 23 consists of a lower lateral sidewall 231 and a lower sloped sidewall 232 which is formed by bend downward at one end thereof, with an obtuse angle between them, specifically, understood as the upper sidewall 22 of said mesial groove consists of the upper lateral sidewall 221 and the upper sloped sidewall 222 which is formed by bend upper-right at right end thereof, and the lower sidewall 23 of said mesial groove consists of the lower lateral sidewall 231 and the lower sloped sidewall 232 which is formed by bend lower left at left end thereof (or, described as the upper sidewall 22 of said mesial groove 2 consists of the upper lateral sidewall 221 and the upper sloped sidewall 222 which is formed by bend upper left at left end thereof, and the lower sidewall 23 of said mesial groove consists of the lower lateral sidewall 231 and the lower sloped sidewall 232 which is formed by bend buttom-right at right end thereof), and the said upper lateral sidewall 221 and lower lateral sidewall 231 are parallel and the said upper sloped sidewall 222 and lower sloped sidewall 232 are parallel; characterized in that the said groove 2 also has a detachable groove extender 3, which includes a connecting section 31 and two subgrooves, left and right 32, said connecting section 31 connecting said left and right subgrooves 32 together, each 32 consisting of a subgroove base 321 and an upper lateral sidewall 322 and a lower lateral sidewall 323 located thereon, and a mounting groove 26 located on the said groove base 21 or said lower wing 25 matches with said connecting section 31, and the said upper lateral sidewall 322 and lower lateral sidewall 323 of each said subgroove 32 are in the same plane with said upper lateral sidewall 22 and lower lateral sidewall 23 of said groove, and said subgroove base 321 and groove base 21 are in the same plane, forming a groove that extends to the left and right.

For the aforementioned orthodontic treatment bracket, the size and shape of the left and right subgrooves of the preferred groove extender 3 are the same, forming a groove that extends to the left and the right with groove 2.

In the preferred protocol of the aforementioned orthodontic treatment bracket, there can be a lateral auxiliary groove 4 which is parallel with groove 2 inside the groove base, and the preferred auxiliary groove is arc-shaped, consisting of an upper lateral sidewall 41 and a lower lateral sidewall 42 and a top wall 44, wherein the inner surfaces of the said upper lateral sidewall 41 and lower lateral sidewall 42 are wavy folding and relatively protruded, the number of the wavy folding and protruded surfaces on the inner side of each sidewall is 2-8, equally spaced and / or symmetrical, and each folding surface 43 intersects two by two, forming intersecting lines that are parallel with the upper lateral sidewall 41 and the lower lateral sidewall 42.

Futher, in the preferred protocol of the aforementioned orthodontic treatment bracket, a vertical tube slot 5 that passes through the groove base 21 and auxiliary groove 4 can be provided along the longitudinal center line of the bracket base 1, and the diameter of the preferred vertical tube slot 5 is 0.018-0.020 inches.

For the aforementioned orthodontic treatment bracket, the length of the preferred groove is 0.074-0.145 inches, and the whole groove , after inserting the fitting piece of the groove, shall be 0.019-0.039 inches longer.

For the aforementioned orthodontic treatment bracket, the length of the preferred auxiliary groove is 0.137-0.157 inches, the width is 0.018-0.020 inches, and the depth is 0.018-0.020 inches.

For the aforementioned orthodontic treatment bracket, the preferred groove and the auxiliary groove have an axial tilt β, of which the numerical value is adjusted on the basis of the axial tilt value of the dental crown; when the bracket is used for mandibular incisor, the β value is the axial tilt value of the dental crown plus 2°; when the bracket is used for other teeth, the β value is the axial tilt value of the dental crown plus 4°, so as to compensate the "Angle escape"caused by the gap between the archwire and the groove.

For the aforementioned orthodontic treatment bracket, the base plane of preferred groove and the surface of the bracket base form a torque angle θ, of which the numerical value is adjusted on the basis of the torque angle value of the dental crown; when the bracket is used for the upper teeth, the value of the torque angle θ is the torque angle value of the dental crown plus 3-14°; when the bracket is used for the lower teeth, the value of torque angle θ is the torque angle value of the dental crown plus 1-5°.

For the aforementioned orthodontic treatment bracket, the preferred groove is square, the width is 0.018-0.022 inches, and the depth is 0.022-0.025 inches.

For the aforementioned orthodontic treatment bracket, the longitudinal center line B of the preferred bracket has an angle of inclination γ; because the vertical tube slot 5 is located along the longitudinal center line of the bracket, the vertical tube slot 5 also has the same angle of inclination γ, γ=0-11°.

For the aforementioned orthodontic treatment bracket, the extending line of the inner side of the sloped sidewall and that of the inner side of the lateral sidewall of the preferred groove form an included angle α=20-25°.

Generally, the purpose of using the double-groove bracket clinically is to rely on the two archwires placed in the two grooves to form mechanical match, so as to control the three-dimensional position of the teeth. However, the distance between the two grooves of the current double-groove bracket is very close, and both are located at the middle position of the whole bracket, so when used clinically, the two grooves are close to the corresponding position of the center of clinical crown, therefore its correction effect is not signicantly different from single-groove bracket (the groove is usually located at the middle position of the whole bracket, corresponding to the position of the center of clinical crown). Because the center of clinical crown is far from the center of resistance of tooth movement at the tooth root (the center of resistance of tooth is basically the same with the geometric center of the tooth root, and the center of resistance of unirooted teeth is located at the proximal alveolar ridge of the dental long axis, about 1/2 to 1/3 of the root length), when securing the bracket to this position, be it the groove of single-groove bracket or double-groove bracket, it is relatively far from the center of resistance of tooth movement, making it hard to effectively control three directions and reach the treatment requirements for tooth occlusion and facial shape improvement during orientation adjustment.

To overcome the aforementioned problem, the present invention provides an orthodontic treatment bracket with double grooves, including a bracket base 1. There is a mesial groove 2 and a distal auxiliary groove 4' on the outer surface of the bracket base, which are parallel, wherein the said mesial groove 2 and the distal auxiliary groove 4' are located on the upper and lower sides of the bracket base 1 respectively, and the distance between the mesidal groove 2 and the bracket base is greater than the distance between the distal auxiliary groove 4' and bracket base, and the vertical interval between the lateral center line a1 of the mesidal groove and the lateral center line a2 of the distal auxiliary groove is 0.086-0.196 inches. The said mesial groove 2 consists of a groove base 21 secured on the bracket base and the upper and lower sidewalls 22 & 23. The said upper sidewall 22 and lower sidewall 23 extend outward to form an upper bracket wing 24 and a lower bracket wing 25. The upper sidewall 22 of the said groove consists of an upper lateral sidewall 221 and an upper sloped sidewall 222 which is formed by bend upward at one end thereof, with an obtuse angle between them. The lower sidewall 23 of the said groove consists of the lower lateral sidewall 231 and the lower sloped sidewall 232 which is formed by bend downward at one end thereof, with an obtuse angle between them. The upper lateral sidewall 221 and the lower lateral sidewall 231 are parallel, and the upper sloped sidewall 222 and the lower sloped sidewall 232 are parallel. The said groove 2 also has a detachable groove extender 3, which includes a connecting section 31 and the left & right subgrooves 32 & 33. The connecting section 31 connects the left & right subgrooves 32 & 33, each of which 32 consists of a subgroove base 321 and an upper lateral sidewall 322 and a lower lateral sidewall 323 located on the subgroove base. There is a mounting section 26 on the groove base 21 or the lower bracket wing 25 that fits with the connecting section 31. The upper lateral sidewall 322 and the lower lateral sidewall 323 of each subgroove are in the same plane with the upper lateral sidewall 22 and the lower lateral sidewall 23 of groove 2 respectively, and the said subgroove base 321 are in the same plane with the groove base 21, forming the mesial groove that extends to the left and right.

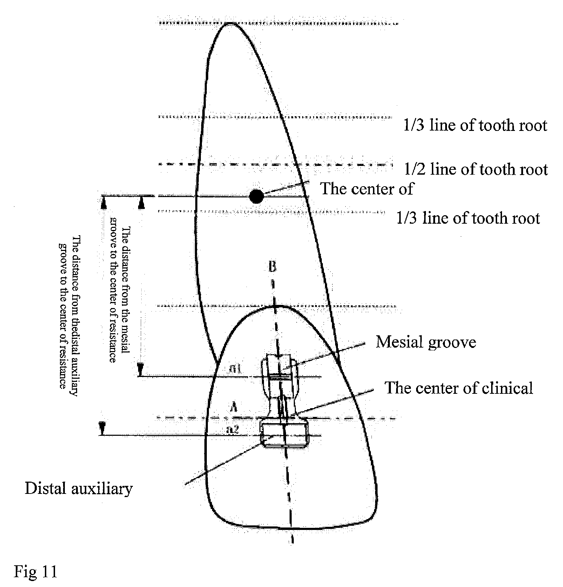

The aforementioned "distal" and "mesial" are defined by the distance between the groove and the center of resistance of tooth movement. The groove close to the center of resistance of tooth movement is the mesial groove, and the one far from the center of resistance of tooth movement is the distal auxiliary groove (as shown in FIG.11). The center of clinical crown is the midpoint of the facial axis of clinical crown, which is the marking point frequently used by the straight archwire bracket. When using the said new bracket of the present invention, the bracket is placed on the surface of the dental crown so that the mesial groove is located at the tooth root of the crown center and the distal auxiliary groove is located at the occlusion part of the crown center, and the distance between the lateral center line a1 of the mesidal groove and the center of clinical crown A is made greater than the distance between the lateral center line a2 of the distal auxiliary groove and the center of clinical crown A. The thin, soft and flexible NiTi round wire is placed into the distal auxiliary groove, and because it is relatively far from the center of resistance of tooth movement, it can promote the fast movement of the teeth and improve the efficiency of position adjustment. The thick, hard and flexible NiTi or stainless steel rectangular archwire is placed into the mesial groove, and because it is relatively close to the center of resistance of tooth movement, it can promote precise control of the three-dimensional movement of teeth. The aforementioned distal auxiliary groove can directly use the surface of the bracket base as the groove base, and the distance between the base of the mesial groove and the bracket base is greater than 0; or, the base of the mesial groove and the base of the distal auxiliary groove are higher than the surface of the bracket base, the distance between the base of the mesial groove and the bracket base is greater than the distance between the base of distal auxiliary groove and the bracket base; the mesial groove during use can fully apply the torque effect of the bracket and improve the accuracy of orientation adjustment; the vertical interval between the lateral center line of the mesidal groove and that of the distal auxiliary groove is 0.086-0.196 inches, so as to meet the different requirements for main and auxiliary grooves in different clinical stages of position adjustment and orientation adjustment.

Arc-shaped bracket base that can better fit with the tooth surface is preferred for the aforementioned orthodontic treatment bracket with double groove; further, lines can be added to the side of the bracket base that fits with teeth so as to increase the friction with the teeth and fit better.

In the preferred protocol of the aforementioned orthodontic treatment bracket with double grooves, a vertical tube slot 5 that passes through the bracket base 21 of the mesial groove and the distal auxiliary groove 4' can be located along the longitudinal center line of the bracket base (the said vertical tube slot 5 passes through the bracket base 21, not intersects with the archwire slot of the mesial groove, but intersects with the archwire slot of the distal auxiliary groove). The diameter of the preferred vertical tube slot 5 is 0.018-0.020 inches, so as to insert relevant accessories during the clinical orthodontic treatment.

In the preferred protocol of the aforementioned orthodontic treatment bracket with double grooves, the distal auxiliary groove 4' is secured on the bracket base 1, consisting of the upper lateral sidewall 41' and the lower lateral sidewall 42' and the outer surface of the bracket base. The inner surfaces of the upper lateral sidewall 41' and the lower lateral sidewall 42' are wavy folding and relatively protruded. The number of the wavy folding and protruded surfaces on the inner side of each sidewall is 2-8, equally spaced and / or symmetrical, and each folding surface 43' intersects two by two, forming the intersecting lines that are parallel with the upper lateral sidewall 41' and the lower lateral sidewall 42'. When the archwire is placed into the distal auxiliary groove, the upper and lower sidewalls of the archwire and groove form paired point contact. Futher, the upper and lower lateral sidewall 41' and 42' of the preferred distal auxiliary groove extend, arch and intersect to form the top wall 44' of the groove, forming a tubular groove with an arc-shaped inner top wall and an opening to the buccal and labial side. The paired upper and lower folding surfaces on the inner surface of the upper lateral sidewall 41' and lower lateral sidewall 42' extend upward, arch and intersect with the inner top wall of the groove to form a smooth cambered surface.

For the aforementioned orthodontic treatment bracket, the length of the archwire slot of the preferred mesial groove is 0.074-0.145 inches; after inserting the fitting piece of the groove, the whole archwire slot is 0.019-0.039 inches longer.

For the aforementioned orthodontic treatment bracket, the length of the archwire slot of the preferred distal auxiliary groove is 0.137-0.157 inches, the width is 0.018-0.020 inches, and the depth is 0.018-0.020 inches.

For the aforementioned orthodontic treatment bracket, the preferred mesial groove and distal auxiliary groove have an axial tilt β, of which the numerical value is adjusted on the basis of the axial tilt value of the dental crown; when the bracket is used for mandibular incisor, the β value is the axial tilt value of the tooth plus 2°; when the bracket is used for other teeth, the β value is the axial tilt value of the tooth plus 4°, so as to compensate the "Angle escape"caused by the gap between the archwire and the groove.

For the aforementioned orthodontic treatment bracket, the base plane of preferred mesidal groove and the surface of the bracket base form a torque angle θ, of which the numerical value is adjusted on the basis of the torque angle value of the dental crown; when the bracket is used for the upper teeth, the value of the torque angle θ is the torque angle value of the dental crown of the upper teeth plus 3-14°; when the bracket is used for the lower teeth, the value of torque angle θ is the torque angle value of the dental crown of the lower teeth plus 1-5°.

For the aforementioned orthodontic treatment bracket, the preferred mesial groove is square, with the width of 0.018-0.022 inches and the depth of 0.022-0.025 inches; the vertical distance between the lateral center line of the said mesial groove and the lateral center line of the center of clinical crown is 0.065-0.147 inches, and the vertical distance between the lateral center line of the distal auxiliary groove and the lateral center line of the center of clinical crown is 0.021-0.049 inches.

For the aforementioned orthodontic treatment bracket, the longitudinal center line B of the preferred bracket has an angle of inclination γ; because the vertical tube slot 5 is located along the longitudinal center line of the bracket, the vertical tube slot 5 also has the same angle of inclination γ, γ=0-11°.

For the aforementioned orthodontic treatment bracket, the extending line of the inner side of the sloped sidewall and that of the inner side of the lateral sidewall of the preferred mesial groove form an included angle α=20-25°.

All the aforementioned brackets can be made up of any suitable material, such as biological ceramics, crystal ceramics, titanium alloy, plastics and so on.

For all the aforementioned brackets, the fitting surface between the curved bracket body and the teeth has anti-sliding lines.

Advantages of the present invention:
(1) The present invention makes improvement on the groove structure of bracket; switching between the two different contact modes of the archwire and the bracket groove is realized by flexibly controlling the length of the groove with the extender, thus satisfying the different requirements for friction in different clinical treatment stages. During the position adjustment, the groove is relatively short, and the archwire and bracket groove is in the point contact state with low friction, which is favorable for teeth movement, thereby shortening the course of treatment; during the orientation adjustment, the groove is relatively long, the archwire and bracket groove is in the surface contact state with high friction, which is favorable for the expression of the three-dimensional orientation data of the bracket and for controlling and adjusting the three-dimensional orientation of teeth and improving orthodontic effect.
(2) The other technical protocol of the present invention is an orthodontic treatment bracket with double grooves, whose mesial groove has an extender. The distance between the mesial groove and the distal auxiliary groove of the double groove bracket is d=0.086-0.196 inches, much greater than that of current technology. The distal auxiliary groove is relatively far from the center of resistance of tooth movement, so the orthodontic force can quickly realize teeth tipping movement through filamentary light force, which can accelerate the position adjustment. The mesial groove is close to the center of resistance of tooth movement, thus the elastic force applied by the correction archwire is also close to the center of resistance, realizing the stable movement of all the teeth; this mode of force application can effectively control the movement of teeth in three directions, improve the effect of orientation adjustment and shorten the duration thereof.

### DESCRIPTION OF FIGURES

FIG.1 is a schematic diagram of an orthodontic treatment bracket set forth in Embodiment 1 (1 is the bracket base, 2 is the groove, 3 is the groove extender, 4 is the auxiliary groove, and 5 is the vertical tube slot ).
FIG.2 is a schematic diagram of a groove 2 of an orthodontic treatment bracket set forth in Embodiment 1 (4 is the auxiliary groove, 5 is the vertical tube slot, 21 is the groove base, 22 is the upper sidewall, 23 is the lower sidewall, 24 is the upper wing, 25 is the lower wing, 26 is the mounting groove, 221 is the upper lateral sidewall, 222 is the upper sloped sidewall, 231 is the lower lateral sidewall, and 232 is the lower sloped sidewall).
FIG.3 is a schematic diagram of an extender 3 of an orthodontic treatment bracket set forth in Embodiment 1 (31 is the connecting section, 32 is the subgroove, 321 is the subgroove base, 322 is the upper lateral sidewall, and 323 is the lower lateral sidewall).
FIG.4 is a schematic diagram of an orthodontic treatment bracket with double grooves set forth in Embodiment 3 (1 is the bracket base, 2 is the mesial groove, 4' is the distal auxiliary groove, and 5 is the vertical tube slot).
FIG.5 is a schematic diagram of a mesial groove of an orthodontic treatment bracket with double grooves set forth in Embodiment 3 (21 is the groove base, 22 is the upper sidewall, 23 is the lower sidewall, 24 is the upper wing, 25 is the lower wing, 26 is the mounting groove, 221 is the upper lateral sidewall, 222 is the upper sloped sidewall, 231 is the lower lateral sidewall, and 232 is the lower sloped sidewall).
FIG.6 is a schematic diagram of an extender 3 of an orthodontic treatment bracket with double grooves set forth in Embodiment 3 (31 is the connecting section, 32 is the subgroove 32, 321 is the subgroove base, 322 is the upper lateral sidewall, and 323 is the lower lateral sidewall).
FIG.7 is a schematic diagram of the structure of an extender fitting mesial groove of an orthodontic treatment bracket with double grooves set forth in Embodiment 3 (1 is the bracket base, 2 is the mesial groove, 3 is the groove extender, 4' is the distal auxiliary groove, and 5 is the vertical tube slot).
FIG.8 is a schematic diagram of a distal auxiliary groove set forth in Embodiment 4 (41' is the upper lateral sidewall, 42' is the lower lateral sidewall, 43' is the single folding surface, and 44' is the top wall).
FIG.9 is a schematic diagram of a torque angle θ of a mesial groove set forth in Embodiment 5 (21 is the groove base of the mesial groove, 24 is the upper wing, 25 is the lower wing, 232 is the lower sloped sidewall, and θ is the torque angle).
FIG.10 is a schematic diagram of an axial tilt β, an angle of inclination γ and an included angle α of a bracket set forth in Embodiment 5 (1 is the bracket base, 2 is the mesial groove, 4' is the distal auxiliary groove, 5 is the vertical tube slot, a is the included angle, and β is the axial tilt).
FIG.11 is a schematic diagram of position relations by use of a bracket set forth in Embodiment 4 (al is the lateral center line of the archwire slot of the mesial groove, a2 is the lateral center line of the archwire slot of the distal auxiliary groove, A is the center of clinical crown, B is the longitudinal center line of the bracket, and d is the vertical interval between the lateral center line of the archwire slot of mesidal groove and that of distal auxiliary groove).

### DETAILS OF THE EMBODIMENTS

### Embodiment 1

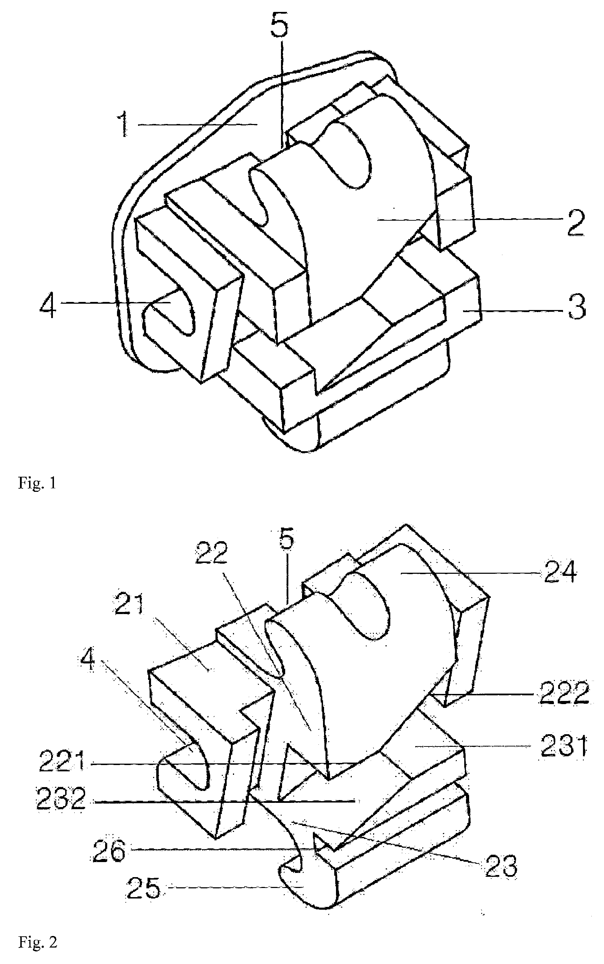

An orthodontic treatment bracket, as shown in FIG.1-3, comprising a bracket base 1 and a groove 2, which consists of a groove base 21 secured on the bracket base 1, an upper sidewall 22 and a lower sidewall 23, wherein the said upper sidewall 22 and lower sidewall 23 extend outward to form an upper bracket wing 24 and a lower bracket wing 25 respectively, and the said upper sidewall 22 of said groove consists of an upper lateral sidewall 221 and an upper sloped sidewall 222 which is formed by bend upward at one end thereof, and the said lower sidewall 23 consists of a lower lateral sidewall 231 and a lower sloped sidewall 232 which is formed by bend downward at one end thereof (or, described as the upper sidewall 22 of said mesial groove 2 consists of the upper lateral sidewall 221 and the upper sloped sidewall 222 which is formed by bend upper left at left end thereof, and the lower sidewall 23 of said mesial groove consists of the lower lateral sidewall 231 and the lower sloped sidewall 232 which is formed by bend buttom-right at right end thereof). The upper lateral sidewall 221 and the lower lateral sidewall 231 are parallel, and the upper sloped sidewall 222 and the lower sloped sidewall 232 are parallel. The said groove also has a detachable groove extender 3, which includes a connecting section 31 and two subgrooves, left and right 32. The connecting section 31 connects the left & right subgrooves 32, each of which 32 consists of a subgroove base 321 and an upper lateral sidewall 322 and a lower lateral sidewall 323 located thereon. There is a mounting section 26 that fits with the connecting section on the groove base 21 of the said groove 2 or the lower bracket wing 25. The groove size and shape of each subgroove 32 are the same with groove 2. After inserting the connecting section 31 of the groove extender 3 into the mounting groove 26, a whole groove that stretchs to the left and right with groove 2 is formed. There's a lateral auxiliary groove 4 of arc shape inside the said groove base 21. There is a vertical tube slot 5 along the longitudinal center line B on the top edge of bracket base 1 that passes through the groove base 21 and auxiliary groove 4.

The aforementioned groove with a groove extender can be used separately or in combination according to the position adjustment or orientation adjustment stage of orthodontics, specifically:
During the position adjustment of early teeth stage, i.e. alignment and levelling of teeth: (1) due to the left and right openings of the auxiliary groove and the bell shaped vertical axis position of the bracket body, the archwire and the inner wall of the groove form point contact, at which moment the friction between the two is relatively small. The fine wire, such as NiTi round wire of 0.012 or 0.014 inches, is placed into the auxiliary groove, making the teeth alignment quickly. Furthermore, because the groove is narrow, the inner sidewall of the groove consists of the lateral sidewall and the sloped sidewall, forming a point contact between the archwire and the bracket groove; using the thick NiTi round wire in combination with fine wire of the auxiliary groove can not only maintain the shape of the dental arch but also quickly complete the teeth alignment at the early stage of treatment. (2) Further, by virtue of the point contact between the archwire and the mesial groove, the NiTi rectangular archwire, stainless steel rectangular archwire or β titanium wire from thin to thick is used to correct the teeth malposition in the vertical dimension and the Spee's curve, so as to quickly level the teeth. (3) In the next orientation adjustment stage, the mesial groove extender is inserted, the bracket groove is lengthened, and the archwire is inserted into the groove and gradually transited to the thickest stainless steel rectangular archwire or β titanium wire, contacting with the groove bearing surface, at which time the friction between the archwire and the groove is large, thereby the three-dimensional orientation of the teeth can be accurately controlled.

### Embodiment 2

This embodiment makes improvement on the structure of auxiliary groove 4 on the basis of Embodiment 1 (see the schematic diagram 8 for the structure of distal auxiliary groove in Embodiment 4). The auxiliary groove 4 is arc-shaped, comprising the upper lateral sidewall 41 and lower lateral sidewall 42 and the top wall 44, wherein the inner surfaces of two lateral sidewalls are wavy folding and relatively protruded, the number of protuberances of the wavy folding and protruded surfaces is 2-8, equally spaced and / or symmetrical, and each folding surface 43' intersects two by two, forming intersecting lines that are parallel with the upper lateral sidewall 41 and the lower lateral sidewall 42.

### Embodiment 3

This embodiment chooses the suitable size on the basis of Embodiments 1 and 2. The diameter of the vertical tube slot 4 is 0.018-0.020 inches, the length of the groove 2 is 0.074-0.145 inches, and the whole groove, after inserting a groove extender 3, is 0.019-0.039 inches longer. The length of the auxiliary groove 4 is 0.137-0.157 inches. See the schematic diagram 9 of the torque angle θ of the mesial groove set forth in Embodiment 5 and the schematic diagram 10 of the axial tilt β, the angle of inclination γ and the included angle α of the bracket. The groove 2 and the auxiliary groove 4 have an axial tilt β, the numerical value of which is adjusted on the basis of the axial tilt value of dental crown; when the bracket is used for mandibular incisor, the β value is the axial tilt value of the tooth plus 2°; when the bracket is used for other teeth, the β value is the axial tilt value of the tooth plus 4°, so as to compensate the "Angle escape"caused by the gap between the archwire and the groove. The base plane of the groove and the surface of the bracket base form a torque angle θ, the numerical value of which is adjusted on the basis of the torque angle value of the dental crown; when the bracket is used for the upper teeth, the value of the torque angle θ is the torque angle value of the dental crown plus 3-14°; when the bracket is used for the lower teeth, the value of torque angle θ is the torque angle value of the dental crown plus 1-5°. The groove is square, with the width of 0.018-0.022 inches and the depth of 0.022-0.025 inches. The longitudinal center line B of the bracket has an angle of inclination γ; because the vertical tube slot 5 is located along the longitudinal center line of the bracket, the vertical tube slot 5 also has the same angle of inclination γ, γ=0-11°. The extending line of the upper sloped sidewall 222 and the upper lateral sidewall 221 of groove 2 and that of the lower sloped sidewall 232 and lower lateral sidewall 231 thereof form an included angle α=20-25°.

### Embodiment 4

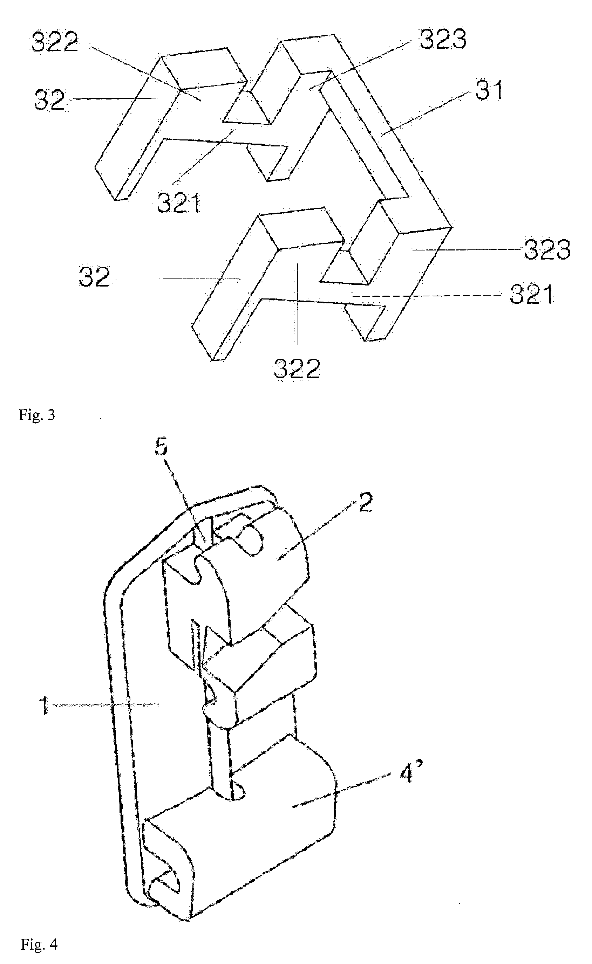

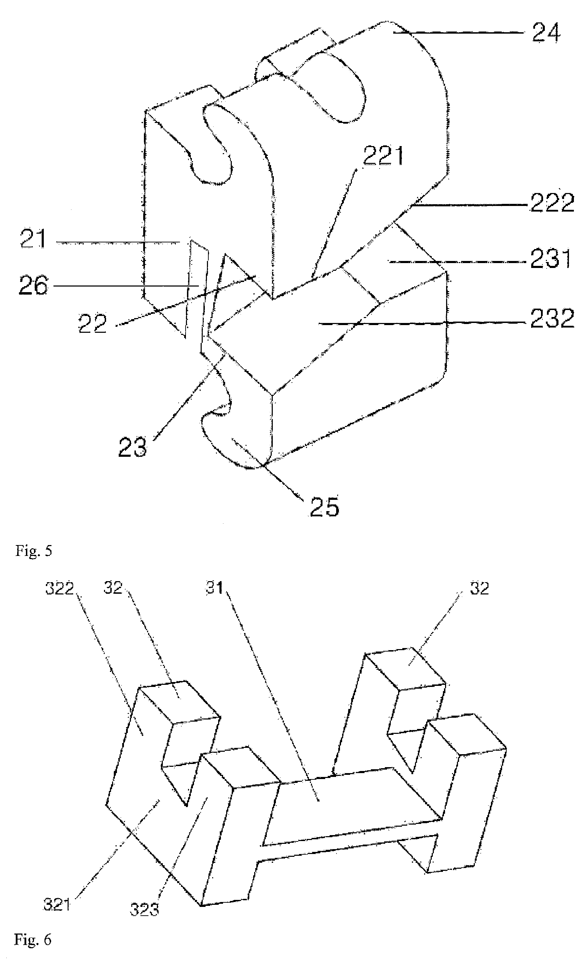

An orthodontic treatment bracket with double grooves, as shown in Fig.4-10, comprising the bracket base 1, There is a mesial groove 2 and a distal auxiliary groove 4' on the outer surface of the bracket base, which are parallel, wherein the said mesial groove 2 and the distal auxiliary groove 4' are located on the upper and lower sides of the bracket base 1, respectively, and the distance between the base of the mesidal groove 2 and the bracket base is greater than the distance between the base of the distal auxiliary groove 4' and bracket base, and the vertical interval d between the lateral center line of the mesidal groove and the lateral center line of the distal auxiliary groove is 0.086-0.196 inches. The said mesial groove 2 is of square shape, comprising the groove base 21 secured on the bracket base 1 and the upper and lower sidewalls 22 & 23. The said upper sidewall 22 and lower sidewall 23 extend outward to form an upper bracket wing 24 and a lower bracket wing 25. The upper sidewall 22 of the said groove consists of an upper lateral sidewall 221 and an upper sloped sidewall 222 which is formed by bend upper-right at right end thereof, and the lower sidewall 23 consists of a lower lateral sidewall 231 and a lower sloped sidewall 232 which is formed by bend lower left at left end thereof (or, described as the upper sidewall 22 of said mesial groove 2 consists of the upper lateral sidewall 221 and the upper sloped sidewall 222 which is formed by bend upper left at left end thereof, and the lower sidewall 23 of said mesial groove consists of the lower lateral sidewall 231 and the lower sloped sidewall 232 which is formed by bend buttom-right at right end thereof). The upper & lower lateral sidewalls are located at the two sides of the longitudinal center line, the upper & lower lateral sidewalls 221 & 231 are parallel, and the upper & lower sloped sidewalls 222 & 232 are parallel. The said groove also has a detachable groove extender 3, which includes a connecting section 31 and two subgrooves, left and right 32 & 33. The said connecting section 31 connects the left & right subgrooves 32 & 33, each 32 or 33 consisting of a subgroove base 321 and an upper lateral sidewall 322 and a lower lateral sidewall 323 located at the subgroove base. There is a mounting section 26 that fits with the connecting section on the groove base 21 of the said groove 2 or the lower bracket wing 25. The upper and lower lateral sidewalls 322 &323 on each subgroove 32 or 33 are in the same plane with the upper and lower lateral sidewalls 22 & 23 of the groove. The said subgroove base 321 and the groove base 21 are in the same plane, forming a symmetrical groove that extends to the left and right. There is a vertical tube slot 5 along the longitudinal center line B direction on the top edge of the bracket base that passes through the mesial groove 2 and the distal auxiliary groove 4', and the bracket base 1 is arc-shaped.

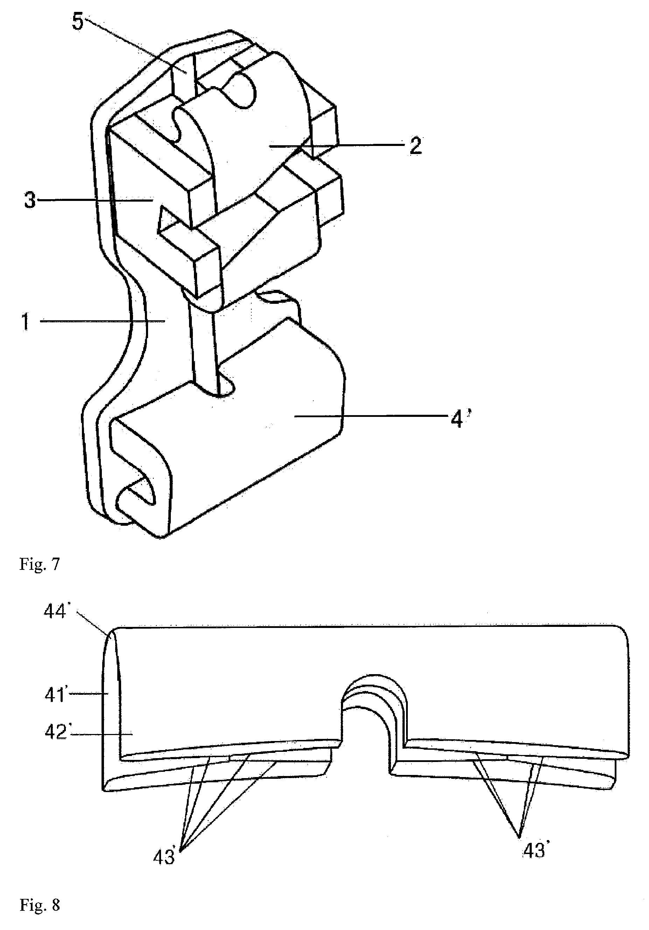

The distal auxiliary groove 4' is secured on the bracket base 1, as shown in FIG.8, consisting of two parallel upper and lower lateral sidewalls 41 & 42 and the outer surface of the bracket base. There're symmetrical wavy folding surfaces 43 on the inner surface of the upper and lower lateral sidewalls, protruding to the lateral center line of groove, the number of which is 2-4. Each folding surface is rectangular, which intersects two by two to form fold lines vertical to the groove base. When the archwire is placed inside the distal auxiliary groove, the archwire and the upper and lower sidewalls of the groove form paired point contact. The two lateral sidewalls of the distal auxiliary groove extend upward, arch and form a top wall 44, forming a tubular groove with an arc-shaped inner top wall and an opening to the buccal and labial side.

### Embodiment 5

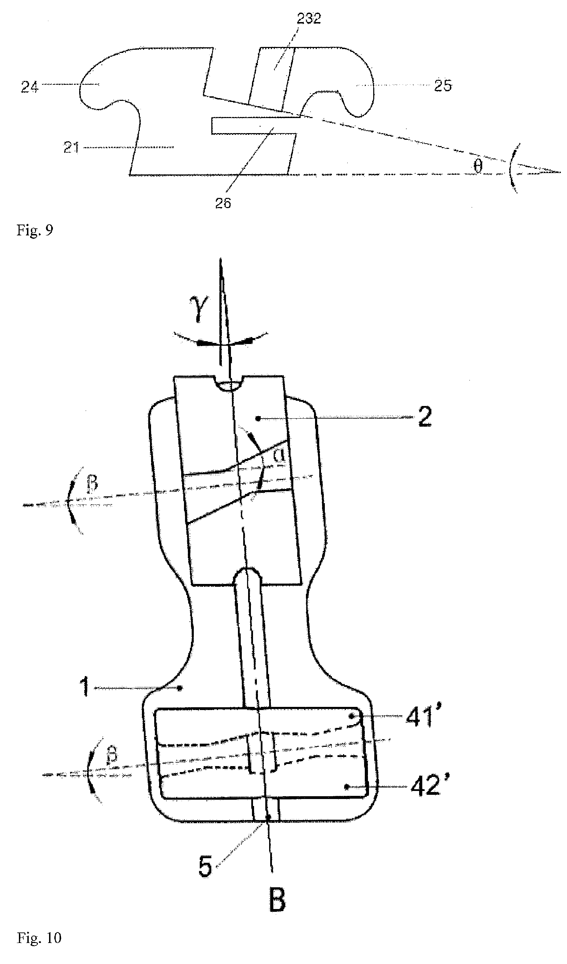

This embodiment chooses the suitable size on the basis of Embodiment 4. The diameter of the vertical tube slot 5 is 0.018-0.020 inches; the mesial groove is square, with length of 0.074-0.145 inches, width of 0.018-0.022 inches and depth of 0.022-0.025 inches; the length of the distal auxiliary groove is 0.137-0.157 inches, the width is 0.018-0.020 inches, and the depth is 0.018-0.020 inches. After the groove extender 3 is inserted into the mesial groove, the whole groove is 0.019-0.039 inches longer. As shown in FIG.9 and FIG.10, the mesial groove 2 and the distal auxiliary groove 4' have an axial tilt β, the numerical value of which is adjusted on the basis of the axial tilt value of the dental crown; when the bracket is used for mandibular incisor, the β value is the axial tilt value of the tooth plus 2°; when the bracket is used for other teeth, the β value is the axial tilt value of the tooth plus 4°, so as to compensate the "Angle escape"caused by the gap between the archwire and the groove. The base plane of the mesial groove and the surface of the bracket base form a torque angle θ, the numerical value of which is adjusted on the basis of the torque angle value of the dental crown; when the bracket is used for the upper teeth, the value of the torque angle θ is the torque angle value of the dental crown of the upper teeth plus 3-14°; when the bracket is used for the lower teeth, the value of torque angle θ is the torque angle value of the dental crown of the lower teeth plus 1-5°. The longitudinal center line B of the bracket has an angle of inclination γ; because the vertical tube slot 5 is located along the longitudinal center line of the bracket, the vertical tube slot 5 also has the same angle of inclination γ, γ=0-11°. The extending line of the upper sloped sidewall 222 and the upper lateral sidewall 221 of groove 2 and that of the lower sloped sidewall 232 and lower lateral sidewall 231 thereof form an included angle α=20-25°.

When using the said new bracket, the bracket is placed on the surface of the dental crown, the mesial groove is close to the center of resistance of tooth movement, the distal auxiliary groove is far from the center of resistance of tooth movement, the mesial groove is located at the tooth root of the mesial groove, and the distal auxiliary groove is located at the occlusion side. The vertical distance between the lateral center line of the mesidal groove and the lateral center line of the center of clinical crown is 0.065-0.147 inches, and the vertical distance between the lateral center line of the distal auxiliary groove and the lateral center line of the center of clinical crown is 0.021-0.049 inches.

The distance between the mesial groove and the distal auxiliary groove of the double groove bracket set forth in the present invetion is d=0.086-0.196 inches, much greater than that of current technology. The distal auxiliary groove is relatively far from the center of resistance of tooth movement, so the orthodontic force can quickly realize teeth tipping movement through filamentary light force, which can accelerate the position adjustment. The mesial groove is close to the center of resistance of tooth movement, thus the elastic force applied by the correction archwire is also close to the center of resistance, realizing the stable movement of all the teeth, this mode of force application can effectively control the movement of teeth in three directions, improve the effect of the orientation adjustment and shorten the duration thereof.

## Claims

1. An orthodontic treatment bracket, comprising a bracket base (1) and a groove (2), which consists of a groove base (21) fixed on the bracket base (1), an upper sidewall (22) and a lower sidewall (23), wherein the said two sidewalls extend outward to form an upper wing (24) and a lower wing (25) respectively, and the said upper sidewall (22) of said groove consists of an upper lateral sidewall (221) and an upper sloped sidewall (222) which is formed by bend upward at one end thereof, with an obtuse angle between them, and the said lower sidewall (23) consists of a lower lateral sidewall (231) and a lower sloped sidewall (232) which is formed by bend downward at one end thereof, with an obtuse angle between them, and the said upper lateral sidewall (221) and lower lateral sidewall (231) are parallel and the said upper sloped sidewall (222) and lower sloped sidewall (232) are parallel; **characterized in that** the said groove (2) also has a detachable groove extender (3), which includes a connecting section (31) and two subgrooves, left and right (32), said connecting section (31) connecting said left and right subgrooves (32) together, each (32) consisting of a subgroove base (321) and an upper lateral sidewall (322) and a lower lateral sidewall (323) located thereon, and a mounting groove (26) located on the said groove base (21) or said lower wing (25) matches with said connecting section (31), and the said upper lateral sidewall (322) and lower lateral sidewall (323) of each said subgroove (32) are in the same plane with said upper lateral sidewall (22) and lower lateral sidewall (23) of said groove, and said subgroove base (321) and groove base (21) are in the same plane, forming a groove that extends to the left and right.

2. An orthodontic treatment bracket as set forth in claim 1, **characterized in that** there are auxiliary grooves (4) parallel to the groove (2) in the said groove base.

3. An orthodontic treatment bracket as set forth in claim 2, **characterized in that** the said auxiliary groove (4) is arch-shaped, and includes an upper lateral sidewall (41), a lower lateral sidewall (42) and a top wall (44), and the inner surfaces of the said upper lateral sidewall (41) and lower lateral sidewall (42) are wavy folding and relatively protruded.

4. An orthodontic treatment bracket as set forth in claim 2 or 3, **characterized in that** there is a vertical tube slot (5) that passes through the groove base (21) and the auxiliary groove (4) along the longitudinal center line of the bracket base.

5. An orthodontic treatment bracket as set forth in claim 4, **characterized in that** the diameter of the said vertical tube slot (5) is 0.018-0.020 inches.

6. An orthodontic treatment bracket, **characterized in that** there is a mesial groove (2) and a distal auxiliary groove (4'), which are parallel, on the outer surface of the bracket base, said mesial groove (2) having the structure of groove as set forth in claim 1, and being located on the upper side of the bracket base (1) with the said distal auxiliary groove (4') on lower, with the distance between the groove base of the mesial groove (2) and the bracket base greater than the distance between the groove base of the distal auxiliary groove (4') and the bracket base and the vertical interval d of 0.086-0.196 inches between the lateral center line of the mesial groove and that of the distal auxiliary groove.

7. An orthodontic treatment bracket as set forth in claim 6, **characterized in that** there is a vertical tube slot (5) located on the said base in the longitudinal center line direction that passes through the groove base (21) of the mesial groove and the distal auxiliary groove (4').

8. An orthodontic treatment bracket as set forth in claim 7, **characterized in that** the diameter of the said vertical tube slot (5) is 0.018-0.020 inches.

9. An orthodontic treatment bracket as set forth in claim 6, 7 or 8, **characterized in that** the said distal auxiliary groove (4') is fixed to the bracket base (1), and consists of the upper lateral sidewall (41') and lower lateral sidewall (42'), which are parallel, and the outer surface of the bracket base, and the said upper lateral sidewall (41') and lower lateral sidewall (42') have wavy folding and relatively protruded inner surfaces.

10. An orthodontic treatment bracket as set forth in claim 9, **characterized in that** the upper lateral sidewall (41') and lower lateral sidewall (42') of the said distal auxiliary groove extend, arch and intersect to form a top wall of groove (44').
